# EUROPEAN PATENT APPLICATION

(11) **EP 2 621 171 A1**
(43) Date of publication of application: **31.07.2013**
(21) Application number: 12152920.0
(22) Date of filing: 27.01.2012
(51) Int. Cl.: H04N 7/26, H04N 1/44, H04N 21/234, H04L 29/06, H04N 21/4788, H04N 21/2343

(54) **System and method for sharing videos**

(71) Applicant: Alcatel Lucent, 75007 Paris (FR)
(72) Inventor: Ghorbel, Mahmoud, 91620 NOZAY (FR); Saidi, Mohamed Adel, 91620 NOZAY (FR); Sayadi, Bessem, 91620 NOZAY (FR)
(74) Representative: Lebkiri, Alexandre

(57) **Abstract**

The invention relates especially to a system (1) for sharing videos comprising:
- a creation module (20) for creation of a region of interest allowing a first user (U1) to create at least one region of interest from a video and create tags and privacy rules for said created region of interest;
- a user module (30) allowing the setting of preferences by a second user (U2), the creation of a user request including said preferences set and the transmission of said user request to a video server (40);
- a video server (40) adapted to receive said user request and allowing the authentication of said second user (U2) and if said second user (U2) is authorized to see a region of interest corresponding to said preferences previously set, according to said privacy rules, displaying said region of interest.

## Description

The present invention relates to a system and a method for sharing videos and more particularly to a system and method for sharing videos respecting privacy rights.

To respect privacy rights, it is well-known to use a video surveillance system configured to identify persons and/or objects captured in a video scene by various techniques, such as detecting changes in a scene or by face detection. Persons or objects detected are automatically scrambled, for example, by way of a private encryption key and the remaining of the video scene is left in tact.
Such system is focused on the protection of the privacy of human faces and/or objects captured by the system. Thus, by using such a video system, the privacy is respected but the quality of video captured is decreased on human faces and/or objects.

Another known technique consists in automaticall-y identify and segment desired content in a video, allowing the user to publish a focused video. For example, when a person is interviewed on the street, such technique permits focused view on the interviewee in order to maintain the privacy of bystanders.
Unfortunately, said technique is focused on a human face and does not allow seeing a large scene.

Accordingly, the present invention is directed to a system and a method for sharing videos respecting the privacy in a wide field-of-view and at the same time preserving the high quality of the video.

To achieve these advantages, and in accordance with the purpose of the invention as embodied, the present invention relates to a system for sharing videos comprising:
- a creation module for creation of a region of interest allowing a first user to:
   - create at least one region of interest from a video,
   - create tags and privacy rules for said created region of interest;
- a user module allowing:
   - the setting of preferences by a second user,
   - the creation of a user request including said preferences set,
   - the transmission of said user request to a server;
- a server adapted to receive said user request and allowing:
   - the authentication of said second user,
   - if said second user is authorized to see a region of interest corresponding to said preferences previously set, according to said privacy rules, displaying said region of interest.

Thereby, the invention describes a system allowing sharing a video and more particularly a region of interest comprising a high resolution. Besides, said system allows controlling access to an added region of interest in a video stream in order to protect the first user privacy.

For example, in the case where the first user captures a video sequence of his house wherein his children are playing in the garden, then the first user can decide to share the captured video on a social network to show his new house. For that purpose, the first user downsampled the original high resolution of the video says 4CIF format. In the downsampled version, his children's are not yet visible, thus the privacy is preserved.

Besides, the first user may want to share the house image and also his children's scene in high resolution only with a second user (for instance his brother). Said second user (i.e. an authorized person, in the example his brother) will have full access to the region of interest including the children's scene. Let's assume that the first user created a plurality of region of interest and authorized his bother to see said region of interest; if his brother is only interested in seeing the children scene, then he set his preferences according to the region of interest relating to the children scene. The second user may find the children scene via tags created by the first user, for instance designated by the tag "first user children in the garden".

In addition to the main features aforementioned in the previous paragraph, the system for sharing videos according to the invention may also have one or more of the additional features below, taken individually or in any technically feasible combination.

In one embodiment, the creation module comprises a wizard module allowing said first user to create said privacy rules.

In one embodiment, the creating module comprises a manager module allowing said first user to:
- handle said created privacy rules created by using said wizard module, and
- associate each privacy rule to a corresponding region of interest.

In one embodiment, the creation module comprises a database containing copies of created privacy rules.

In one embodiment, the creation module comprises a tagging manager allowing said first user to create tags.

In one embodiment, the user module comprises a configuration module allowing said second to setting his preferences.

In one embodiment, the user module comprises a request module allowing said second user to create a user request comprising at least the following elements:
- user identifier,
- name of a video selected,
- preferences set,
- context information.

In one embodiment, the video server comprises an authentication module allowing the authentication of said second user.

In one embodiment, the video server comprises a content manager adapted to receive:
- created region of interest,
- related privacy rules and tags.

In one embodiment, the video server comprises a request analyzer adapted to:
- receive a user request from the user module and ask for a specific video;
- transfer said request to a selection module.

In one embodiment, the video server comprises a selection module adapted to:
- verify second user authentication,
- select region(s) of interest that the second user is authorized and prefers to see.

In one embodiment, the video server comprises a privacy selection module adapted to determine, for a second user, a set of authorized region of interest.

In one embodiment, the video server comprises a personalization module adapted to determine the most suitable region of interest fitting the second user preferences.

In one embodiment, the video server comprises a video and region of interest creator adapted to prepare and send a video comprising at least one region of interest corresponding to the second user preferences previously set.

The invention also relates to a method for sharing videos comprising:
- creation of at least one region of interest from a video, said creation being realized via a creation module
- creation of tags and privacy rules for said at least one region of interest, said creation being realized by a first user via said creation module,
- setting of preferences by a second user via a user module,
- creation of a user request including said preferences set, said creation being realized by said user module,
- transmission of said user request to a server,
- authentication of said second user suit to the reception of said user request by said server,
- if said second user is authorized to see said region of interest corresponding to said preferences previously set, according to said privacy rules, displaying said region of interest, said displaying being realized by said server.

The accompanying drawings are included to provide a further understanding of the invention and are incorporated in and constitute a part of this specification, to illustrate embodiments of the invention and, together with the description, to explain the principles of the invention:
- Figure 1 represents, in a not limited embodiment, a system for sharing videos according to the invention, and
- Figure 2 illustrates, in a not limited embodiment, a method for sharing videos according to the invention.

The same reference numerals will be used throughout the drawings to refer to the same or like parts.

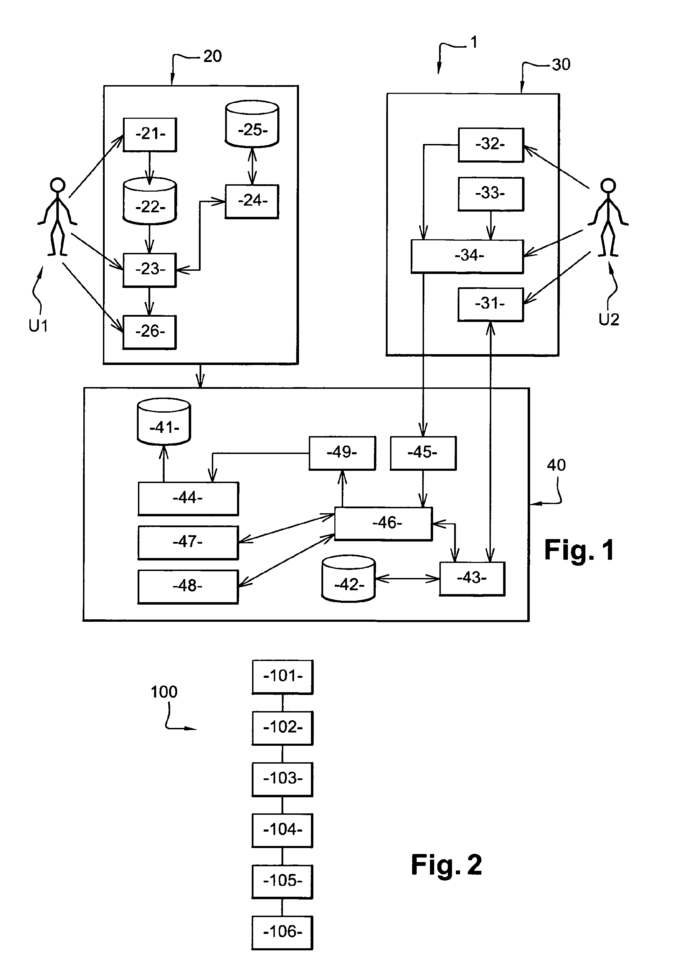

In reference to figure 1, a system 1 for sharing video according to the invention is represented.

The system 1 comprises a creation module 20 for creation of a region of interest allowing a first user U1 to create at least one region of interest from a video and to create tags and privacy rules for said region of interest created. Besides, the system 1 comprises a user module 30 allowing the setting of preferences by a second user U2, the creation of a user request containing said preferences (and context) set, and the transmission of said user request to a server 40.

Furthermore, the system 1 comprises a server 40 adapted to receive said user request and allowing the authentication of the second user U2 and, if said second user U2 is authorized to see a region of interest corresponding to said preferences previously set, according to said privacy rules, displaying said region of interest.

More particularly, the creation module 20 comprises a subscription module 21 that allows the first user U1 to make a subscription to the server 40 before getting the ability to publish his privacy region of interest content. Furthermore, the creation module 20 comprises a contact database 22 containing some information about first user U1. Said information relates both to first user U1 personal information and to his list of contacts. This allows the first user U1 to specify his privacy rules regarding the people who will ask the region of interest: a "permit" or a "deny" of seeing a given region of interest is then generated by the server 40.

The creation module 20 further comprises a wizard module 23 allowing the first user U1 to create privacy rules. The wizard module 23 guides the first user U1 to define privacy rules regarding a given created region of interest. The first user U1 can specify persons who are authorized to see the region of interest, a time to live parameter for a region of interest, the level of details depending on the person seeing the region of interest, etc.... Some rule templates can be used to support the first user U1 in carrying out this specification.

The creation module 20 further comprises a manager module 24 allowing said first user U1 to handle said created privacy rules, and to associate each privacy rule to a corresponding region of interest.

The creation module 20 further comprises a database 25 containing copies of rules created according to a specific format (for instance an XML format).

The creation module 20 further comprises a tagging manager 26 allowing said first user U1 to create tags. Once the privacy rules are defined, the first user U1 is asked to semantically describe the generated region of interest. This is the role of the tagging manager 26. This may be achieved by using some existing mechanisms such as taxonomical classification, simple key word specification, etc... The resulted tags are associated with each region of interest and transferred to the server 40.

Thanks to the creation module 20, the first user U1 can create some region of interest with a high quality resolution video content. Furthermore, the system offers to the first user U1 the way to create and associate both privacy rules and specific tags (or key words) that describe semantically region of interest.

Furthermore, the user module 30 comprises an identification module 31 allowing the second user U2 to be registered on the video server 40 and to be indentified before consuming the video content.

The user module 30 comprises also a configuration module 32 allowing said second user U2 to set his preferences. This configuration module 32 provides a tool allowing the second user U2 to set his preferences regarding the region of interest he would like to see when watching a video. The preferences can cover several aspects like for instance: type content covered by a region of interest, says football sequence, family member zooming, duration, quality, level, etc... In other terms, the second user U2 specifies some preferences for specific video contents.

The user module 30 further comprises a user context module 33 containing additional information about the second user U2. Such information describes the second user context that can influence the region of interest selection process. Some examples of the second user context can be: user access device, access zone, user location, type of user device (public, private, etc). This user context module 33 is responsible of collecting such elements in order to transfer them to a request module 34.

Besides, the user module 30 comprises a request module 34 allowing said second user U2 to create a user request with at least the following elements:
- user identifier,
- name of a selected video (i.e. the video that the second user U2 would like to watch),
- second user preferences regarding the Rols he prefer to see,
- user context information.

The request module 34 sends said user request to the server 40 in order to get the region of interest that the second user U2 would like to see.

The video server 40 comprises a publisher database 41 containing a complete list of the first users U1 publishing their content (video).

The video server 40 comprises also a second user database 42 containing a list of second users U2 willing to consume video content.

The video server 40 comprises an authentication module 43 allowing the authentication of second user U2. This authentication module 43 handles the second user registration and authentication. Once connected, second user U2 can then obtain a session with the server 40 and consume videos.

The video server 40 further comprises a content manager 44 adapted to receives the first user content (video), the created region of interest, the related privacy rules and personalization tags. All these information are stored in separated databases while keeping logical relation between them (relation between first user U1 content and region of interest, relation between each region interest and its related privacy rules, etc.). The content manager 44 is also responsible to provide the video content and the region of interest frame when needed (e.g. to a video and region of interest creator presented below).

The video server 40 further comprises a request analyzer 45 adapted to:
- receive a user request from the user module 30 and ask for a specific video with his preferences and context;
- transfer said request to a selection module.

This request analyzer 45 receives the request coming from the user module 30 and ask for a specific video. The user module 30 analyses the request in order to extract relevant information that could influence the decision. Such information can be: second user identity, second user context (access device, access zone, etc), preferences ... This request analyzer 45 identifies the second user U2 and the video he would like to see. Then the request analyzer 45 transfers that information to a selection module 46.

The video server 40 further comprises a selection module 46 adapted to:
- verify second user U2 authentication;
- select the preferred regions of interest that the second user U2 is authorized to see.

The selection module 46 verifies at first that the second user U2 is correctly authenticated. Then the selection module 46 starts selecting the region of interest that the second user U2 is authorized to display and which suits his preferences and context. The selection module 46 makes the intersection between the following sets of region of interest:
■ the set of authorized region of interest for a second user U2:
   E _{A}= {Rᵢ, i=1..n} where Rᵢ are the authorized region of interest.
■ the set of region of interest corresponding to the second user preferences : E_{P} = (Rⱼ, j=1..m} Rⱼ where are the preferred region of interest.
■ region of interest selected by the video server 40 : E_{S} = E_{A} ∩ E_{P} The video server 40 further comprises a privacy selection module 47 adapted to determine, for a second user U2, the set of authorized region of interest E_{A}.

Several parameters are required to make the suitable decision. Two actors are involved:
■ The creation parameters: represented by the first user U1 privacy rules defined while creating the region of interest;
■ The second user U2 parameters: represented by his identity and by his context of consuming the video. Such information is embedded in the request.

A matching process is done to infer the authorized region of interest and hence defined the *E_{A}* set.

The video server 40 further comprises a personalization module 48 adapted to determine the most suitable region of interest fitting the second user U2 preferences. That could be based on a matching between the tags and the second user U2 preferences in term of region of interest type, content, quality and context. The output of this personalization module 48 is the set *E_{P}* regrouping the preferred region of interest regarding the given video content. The video server 40 further comprises a video and region of interest creator 49 adapted to prepare and to send a video comprising at least one region of interest corresponding to the second user preferences previously set.

Thus, the video and region of interest creator 49 is asked to prepare the video with the region of interest frames extracted from the databases via the content manager 44. The resulted flow is thereby sent to the second user U2.

Figure 2 illustrates a method 100 for sharing videos according to the invention. The method 100 comprises:
- creation of at least one region of interest from a video, said creation 101 being realized via a creation module 20,
- creation of tags and privacy rules for said at least one region of interest 102, said creation 102 being realized by a first user U1 via said creation module 20,
- setting of preferences 103 by a second user U2 via a user module 30,
- creation of a user request including said preferences set 104, said creation 104 being realized by said user module 30,
- transmission of said user request 105 to a video server 40,
- authentication 105 of said second user U2 suit to the reception of said user request by said server 40,
- if said second user 40 is authorized to see said region of interest corresponding to said preferences previously set, according to said privacy rules, displaying 106 said region of interest, said displaying 106 being realized by said server 40.

## Claims

1. System (1) for sharing videos comprising :
- a creation module (20) for creation of a region of interest allowing a first user (U1) to:
- create at least one region of interest from a video,
- create tags and privacy rules for said created region of interest;
- a user module (30) allowing:
- the setting of preferences by a second user (U2),
- the creation of a user request including said preferences set,
- the transmission of said user request to a video server (40);
- a video server (40) adapted to receive said user request and allowing:
- the authentication of said second user (U2),
- if said second user (U2) is authorized to see a region of interest corresponding to said preferences previously set, according to said privacy rules, displaying said region of interest.

2. System (1) according the previous claim wherein said creation module (20) comprises a wizard module (23) allowing said first user (U1) to create said privacy rules.

3. System (1) according to the preceding claim wherein said creating module (20) comprises a manager module (24) allowing said first user (U1) to :
- handle said created privacy rules created by using said wizard module (23), and
- associate each privacy rule to a corresponding region of interest.

4. System (1) according to any of the preceding claims wherein said creation module (20) comprises a database (25) containing copies of created privacy rules.

5. System (1) according to any of the preceding claims wherein said creation module (20) comprises a tagging manager (26) allowing said first user (U1) to create tags.

6. System (1) according to any of the preceding claims wherein said user module (30) comprises a configuration module (32) allowing said second user (U2) to setting his preferences.

7. System (1) according to any of the preceding claims wherein said user module (30) comprises a request module (34) allowing said second user (U2) to create a user request comprising at least the following elements:
- user identifier,
- name of a video selected,
- preferences set,
- context information.

8. System (1) according to any of the preceding claims wherein said video server (40) comprises an authentication module (43) allowing the authentication of said second user (U2).

9. System (1) according to any of the preceding claims wherein said video server (40) comprises a content manager (44) adapted to receive:
- created region of interest,
- related privacy rules and tags.

10. System (1) according to any of the preceding claims wherein said video server (40) comprises a request analyzer (45) adapted to:
- receive a user request from the user module (30) and ask for a specific video;
- transfer said request to a selection module (46).

11. System (1) according to the preceding claim wherein said video server (40) comprises a selection module (46) adapted to :
- verify second user authentication,
- select region of interest that the second user (U2) is authorized and prefers to see.

12. System (1) according to any of the preceding claims wherein said video server (40) comprises a privacy selection module (47) adapted to determine, for a second user (U2), a set of authorized region of interest.

13. System (1) according to any of the preceding claims wherein said video server (40) comprises a personalization module (48) adapted to determine the most suitable region of interest fitting the second user (U2) preferences.

14. System (1) according to any of the preceding claims wherein said video server (40) comprises a video and region of interest creator (49) adapted to prepare and send a video comprising at least one region of interest corresponding to the second user preferences previously set.

15. Method (100) for sharing videos comprising :
- creation of at least one region of interest from a video (101), said creation (101) being realize via a creation module (20),
- creation of tags and privacy rules for said at least one region of interest (102), said creations (102) being realized by a first user (U1) via said creation module (20),
- setting of preferences (103) by a second user (U2) via a user module (30),
- creation of a user request (104) including said preferences set, said creation (104) being realized by said user module (30),
- transmission of said user request (105) to a video server (40),
- authentication (105) of said second user (U2) suit to the reception of said user request by said server (40),
- if said second user (40) is authorized to see said region of interest corresponding to said preferences previously set, according to said privacy rules, displaying (106) said region of interest, said displaying (106) being realized by said server (40).
